# EUROPEAN PATENT APPLICATION

(11) **EP 4 772 371 A1**
(43) Date of publication of application: **08.07.2026**
(21) Application number: 24949311.5
(22) Date of filing: 28.08.2024
(51) Int. Cl.: B60K 1/04, H01M 50/244, B21J 13/02, C22F 1/04

(54) **ALUMINUM ALLOY BATTERY PACK BRACKET AND MANUFACTURING PROCESS THEREFOR**

(30) Priority: 30.07.2024 CN 202411033046
(71) Applicant: Jiangsu Longcheng Precision Forging Group Co., Ltd., Changzhou, Jiangsu 213166 (CN)
(72) Inventor: CHEN, Jianhe, hangzhou, Jiangsu 213166 (CN); TANG, Minjun, hangzhou, Jiangsu 213166 (CN); ZHUANG, Xiaowei, hangzhou, Jiangsu 213166 (CN); WANG, Ling, hangzhou, Jiangsu 213166 (CN)
(74) Representative: Lorenz Seidler Gossel Part. mbB
(86) International application number: PCT/CN2024/115280
(87) International publication number: WO 2026/025586

(57) **Abstract**

The present invention relates to the technical field of aluminum alloy battery pack bracket manufacturing, and in particular to an aluminum alloy battery pack bracket and a manufacturing process thereof. The manufacturing process includes: blanking: obtaining a bar; die heating: heating a forging die; forging: placing the bar into the heated forging die for forging, to obtain a pre-forged part of the aluminum alloy battery pack bracket; trimming: removing flash, to obtain an intermediate product of the aluminum alloy battery pack bracket; solution treatment and aging treatment: sequentially subjecting the intermediate product of the aluminum alloy battery pack bracket to solution treatment and aging treatment, to obtain a heat-treated workpiece of the aluminum alloy battery pack bracket; and inspection and packaging. The present invention optimizes the solution treatment and aging treatment processes to reduce forming stress, thereby minimizing the extent of internal stress damage and residual stress within the workpiece and further suppressing the growth of coarse grains in stress-affected areas. Meanwhile, the forging die solves the problems of difficult placement and positioning of raw material bars during forging, prevents fold defects caused by deflection of raw material bars, and avoids low utilization caused by non-uniform material flow in different directions.

## Description

### TECHNICAL FIELD

The present invention relates to the technical field of aluminum alloy battery pack bracket manufacturing, and in particular to an aluminum alloy battery pack bracket and a manufacturing process thereof.

### BACKGROUND

The aluminum alloy battery pack bracket is a fixed bracket for battery packs used in electric vehicles (EVs) or hybrid electric vehicles (HEVs). With the popularization of electric transportation vehicles, the safe and stable fixation of battery packs has become particularly crucial. The aluminum alloy battery pack bracket has strong support and fixation functions, and can ensure the stability and safety of the battery pack during vehicle operation.

Existing aluminum alloy battery pack brackets are made of 6xxx series aluminum alloy, which includes, by mass percentage: 0.7% to 1.3% of silicon (Si), 0.5% of iron (Fe), 0.1% of copper (Cu), 0.4% to 1.0% of manganese (Mn), 0.6% to 1.2% of magnesium (Mg), 0.25% of chromium (Cr), 0.2% of zinc (Zn), 0.1% of titanium (Ti), and a balance of aluminum (Al).

Due to space constraints of the battery assembly and weight reduction requirements, the aluminum alloy battery pack bracket is a thin-walled workpiece with a thickness less than 6 mm. In the prior art, for similar small-sized forgings, the generally accepted coarse grain standard stipulates that a surface thickness is no more than 3 mm (source: 5.4.4.3 in GB/T 34359-2017), that is, the sum of the upper and lower surface thicknesses is 6 mm. For thin-walled parts, the coarse grain layer formed by the above process reduces the working thickness of the workpiece, thereby significantly impairing its mechanical properties.

One-step forming is generally applied for the forging of aluminum alloy thin-walled parts. However, for some workpieces with complex structures, one-step forging is prone to cause fold defects in the workpieces, leading to a high scrap rate and unstable quality of the workpieces.

### SUMMARY

A technical problem to be solved by the present invention is to overcome the drawbacks in the prior art. Accordingly, the present invention provides an aluminum alloy battery pack bracket and a manufacturing process thereof. The present invention optimizes solution treatment and aging treatment processes to reduce forming stress, thereby minimizing the extent of internal stress damage and residual stress within the workpiece and suppressing the growth of coarse grains in the stress-affected area to improve the mechanical properties of the workpiece. Meanwhile, the forging die of the present invention solves the problems of difficult placement and positioning of raw material bars during forging, prevents fold defects caused by deflection of raw material bars, and avoids low utilization caused by non-uniform material flow in different directions.

The present invention solves the technical problem with following technical solutions:
An aluminum alloy battery pack bracket includes: a long-plate portion and a short-plate portion connected to each other, where the long-plate portion and the short-plate portion are arranged in a V-shaped structure; and
an upper surface and a lower surface of the long-plate portion are respectively provided with a plurality of small protrusions; a fillet joint is arranged between the long-plate portion and the short-plate portion; and a middle of the fillet joint is provided with a large protrusion.

Furthermore, a thinnest portion A of the aluminum alloy battery pack bracket has a thickness of 5 mm to 7 mm.

A manufacturing process of the aluminum alloy battery pack bracket includes following steps:
step S1: blanking: obtaining a bar;
step S2: die heating: heating a forging die;
step S3: pre-forging: placing the bar obtained in the step S1 into a heated pre-forging die for the pre-forging, to obtain a pre-forged workpiece of the aluminum alloy battery pack bracket, where the bar before the pre-forging is at 520°C to 560°C;
step S4: final forging: placing the pre-forged workpiece of the aluminum alloy battery pack bracket obtained in the step S3 into a heated final forging die for the final forging, to obtain a final forged workpiece of the aluminum alloy battery pack bracket;
step S5: trimming: placing the final forged workpiece of the aluminum alloy battery pack bracket obtained in the step S4 into a trimming device, and removing flash, to obtain an intermediate product of the aluminum alloy battery pack bracket;
step S6: water cooling: cooling the intermediate product of the aluminum alloy battery pack bracket obtained in the step S5 in water, where the intermediate product of the aluminum alloy battery pack bracket before the cooling in the water is at 400°C or above;
step S7: solution treatment and aging treatment: sequentially subjecting the intermediate product of the aluminum alloy battery pack bracket from the step S3 to the solution treatment and the aging treatment, to obtain a heat-treated workpiece of the aluminum alloy battery pack bracket, where the solution treatment is performed at 515°C to 535°C for 80 min to 120 min, and the aging treatment is performed at 165°C to 185°C for 6 h to 10 h; and
step S8: inspection and packaging;
where, in the pre-forging of the step S3, a deformation rate from the bar to the pre-forged workpiece of the aluminum alloy battery pack bracket is 86%; and in the final forging of the step S4, a deformation rate from the pre-forged workpiece of the aluminum alloy battery pack bracket to the final forged workpiece of the aluminum alloy battery pack bracket is 15%.

The formation of coarse grain areas in aluminum alloy products results from the damage of an aluminum alloy microstructure by stress, and the residual stress in the microstructure. The size of the stress-affected area in the product determines the size of the area where coarse grains can grow inside the product. Under the action of heat treatment within a normal parameter range, the microstructure undergoes transformation and recrystallization, and coarse grains thus grow in the stress-affected area. The present invention optimizes the solution treatment and the aging treatment to reduce forming stress, thereby minimizing the extent of internal stress damage and residual stress within the workpiece, and further suppressing the growth of coarse grains in the stress-affected area.

Furthermore, the pre-forging of the step S3 and the final forging of the step S4 are performed on a same forging die; the forging die includes an upper forging die, and a lower forging die disposed directly below the upper forging die; the upper forging die and the lower forging die are internally provided with a pre-forging die cavity and a final forging die cavity configured to forge a blank; and the pre-forging die cavity includes an upper die pre-forging cavity located in the upper forging die and a lower die pre-forging cavity located in the lower forging die;
the upper die pre-forging cavity includes two upper pre-forging cavities identically shaped; the two upper pre-forging cavities are arranged symmetrically about a center of the upper die pre-forging cavity; centers of the two upper pre-forging cavities are respectively located at two sides of the center of the upper die pre-forging cavity; each of the two upper pre-forging cavities includes a long-side portion; an outer side of the long-side portion is provided with a first upper material-blocking groove; second upper material-blocking grooves are respectively disposed at outer sides of ends of the two upper pre-forging cavities far away from each other; first upper positioning grooves are respectively disposed at the ends of the two upper pre-forging cavities far away from each other; and second upper positioning grooves are respectively disposed at ends of the two upper pre-forging cavities adjacent to each other; and
the lower die pre-forging cavity includes two lower pre-forging cavities identically shaped; the two lower pre-forging cavities are in one-to-one correspondence with the two upper pre-forging cavities; each of the two lower pre-forging cavities includes a large flat surface configured to form a long side of the blank and a small flat surface configured to form a short side of the blank; the large flat surface and the small flat surface are arranged in a V-shaped structure; the large flat surface is provided with a first lower positioning groove; the small flat surface is provided with a second lower positioning groove; an outer side of the large flat surface is provided with a first lower material-blocking groove corresponding to the first upper material-blocking groove; and outer sides of ends of the two lower pre-forging cavities far away from each other are respectively provided with second lower material-blocking grooves corresponding to the second upper material-blocking grooves.

The specific technical effects are as follows. The pre-forging die cavity adopts a dual-cavity design, which meets the requirement of producing two workpieces in one forging press and improves production efficiency. Due to the special shape of the pre-forged workpiece of the aluminum alloy battery pack bracket, the material faces high flow resistance towards the short sides during pre-forging. The first upper material-blocking groove and the first lower material-blocking groove change the direction of metal flow, facilitating the material flow from the long sides to the short sides. The second upper material-blocking groove and the second lower material-blocking groove achieve an auxiliary effect of changing the metal flow direction, preventing the material from flowing towards two ends instead of the short sides during pre-forging and further improving material utilization. The centers of the two upper pre-forging cavities each have an offset in the left-right direction relative to the center of the upper die pre-forging cavity. The design can prevent the raw material bar from deflecting during pre-forging, which would cause two ends of the raw material bar to deflect into the cavity and generate fold defects, and eliminates the need to chamfer the raw material bar. The second upper positioning groove and the lower positioning groove ensure accurate placement and positioning of the raw material bar. The first upper positioning grooves arranged at two ends play an auxiliary role in positioning the raw material bar. Thus, during the downward pressing of the upper forging die, the two ends of the raw material bar are pressed and can still be clamped in the first upper positioning grooves even if they are tilted up.

Furthermore, the final forging die cavity includes an upper die final forging cavity located in the upper forging die and a lower die final forging cavity located in the lower forging die.

Furthermore, the upper die final forging cavity includes two upper final forging cavities identically shaped; the two upper final forging cavities are arranged symmetrically about a center of the upper die final forging cavity; and each of the two upper final forging cavities is provided with a stepped hole.

The specific technical effects are as follows. The stepped hole is configured to place a clamping post on the blank, and the stepped hole can squeeze the excess material onto the clamping post during the downward pressing of final forging, preventing fold defects caused by the excess material from occurring on the working surface of the workpiece blank.

Furthermore, the lower die final forging cavity includes two lower final forging cavities identically shaped; and the two lower final forging cavities are arranged symmetrically about a center of the lower die final forging cavity and are in one-to-one correspondence with the two upper final forging cavities.

The specific technical effects are as follows. The final forging die cavity adopts a dual-cavity design, which meets the requirement of producing two workpieces in one forging press and improves production efficiency.

Furthermore, each of the two upper pre-forging cavities includes a short-side portion and a long-side portion; the short-side portion and the long-side portion are arranged in a V-shaped structure; a joint between the short-side portion and the long-side portion is provided with a fillet; and the joint between the short-side portion and the long-side portion is further provided with a flat surface.

The specific technical effects are as follows. The fillet with a large radius disposed at the joint between the short-side portion and the long-side portion facilitates material flow, thereby avoiding forging defects such as large folds and material shortage at this location. Considering the special shape of the pre-forged workpiece of the aluminum alloy battery pack bracket, the flat surface is added at the joint between the short-side portion and the long-side portion, which facilitates the material flow and alleviates the problem of coarse grains on the working surface.

Furthermore, the forging die further includes a lower spring, a lower inner ejector plate, a lower ejector pin, a lower outer ejector plate, and a lower ejector pad; the lower ejector pad, the lower outer ejector plate, and the lower inner ejector plate are sequentially arranged at a lower end of the lower forging die in a direction adjacent to the upper forging die; the lower spring includes a first end extending into the lower forging die and a second end passing through the lower inner ejector plate and connected to the lower outer ejector plate; and the lower ejector pin includes a first end abutting against the lower outer ejector plate and a second end passing through the lower inner ejector plate and extending into the lower forging die.

Furthermore, the forging die further includes an upper spring, an upper inner ejector plate, an upper ejector pin, an upper outer ejector plate, and an upper ejector pad; the upper ejector pad, the upper outer ejector plate, and the upper inner ejector plate are sequentially arranged at an upper end of the upper forging die in a direction adjacent to the lower forging die; the upper spring includes a first end extending into the upper forging die and a second end passing through the upper inner ejector plate and connected to the upper outer ejector plate; and the upper ejector pin includes a first end abutting against the upper outer ejector plate and a second end passing through the upper inner ejector plate and extending into the upper forging die.

Furthermore, the forging die further includes a press block and a date stamp; the press block and the date stamp are disposed in the upper forging die; and the press block abuts against the date stamp.

Furthermore, a release agent is required in the pre-forging of the step S3 and the final forging of the step S4; and the release agent is a water-based graphite release agent.

The beneficial effects of the present invention lie in that the present invention provides a reasonable design and has the following advantages:
(1) The present invention optimizes the forging process, the solution treatment, and the aging treatment to reduce forming stress, thereby minimizing the extent of internal stress damage and residual stress within the workpiece and further suppressing the growth of coarse grains in the stress-affected area. Thus, the present invention improves mechanical properties of the workpiece.
(2) In the forging die, the first upper material-blocking groove and the first lower material-blocking groove change the direction of metal flow, facilitating the material flow from the long sides to the short sides. The second upper material-blocking groove and the second lower material-blocking groove achieve an auxiliary effect of changing the metal flow direction, preventing the material from flowing towards two ends instead of the short sides during pre-forging, and further improving material utilization.
(3) In the forging die, the centers of the two upper pre-forging cavities each have an offset in the left-right direction relative to the center of the upper die pre-forging cavity, preventing the raw material bar from deflecting during pre-forging, and eliminating the need to chamfer the raw material bar. The second upper positioning groove, the first lower positioning groove, and the second lower positioning grooves ensure accurate placement and positioning of the raw material bar. The first upper positioning grooves arranged at the two ends of the pre-forging die cavity play an auxiliary role in positioning the raw material bar. Thus, during the downward pressing of the upper forging die, the two ends of the raw material bar are pressed and can still be clamped in the first upper positioning grooves even if they are tilted up.

### BRIEF DESCRIPTION OF THE DRAWINGS

To describe the technical solutions in the specific implementations of the present invention or the prior art more clearly, the drawings required for describing the specific implementations or the prior art are briefly described below. Apparently, the drawings in the following description show merely some implementations of the present invention, and a person of ordinary skill in the art may still derive other drawings from these drawings without creative efforts.
FIG. 1 is a perspective view of an aluminum alloy battery pack bracket in the present invention;
FIG. 2 is a perspective view of the aluminum alloy battery pack bracket from another perspective in the present invention;
FIG. 3 is a schematic structural view of the aluminum alloy battery pack bracket placed in a forging die in the present invention;
FIG. 4 is a schematic structural view of the forging die in the present invention;
FIG. 5 is an exploded view of the forging die in the present invention;
FIG. 6 is a schematic structural view of an upper forging die of the forging die in the present invention;
FIG. 7 is a front view of the upper forging die of the forging die in the present invention;
FIG. 8 is a schematic structural view of a lower forging die of the forging die in the present invention;
FIG. 9 is a front view of the lower forging die of the forging die in the present invention;
FIG. 10 is a front view of the forging die in the present invention;
FIG. 11 is a cross-sectional view taken along line A-A shown in FIG. 10;
FIG. 12 is a cross-sectional view taken along line B-B shown in FIG. 9; and
FIG. 13 is a cross-sectional view taken along line C-C shown in FIG. 7.

### Reference Numerals:

1-1. long-plate portion; 1-2. short-plate portion; 1-3. small protrusion; 1-4. large protrusion;
1. upper forging die; 2. lower forging die; 3. upper pre-forging cavity; 4. first upper material-blocking groove; 5. second upper material-blocking groove; 6. first upper positioning groove; 7. second upper positioning groove; 8. lower pre-forging cavity; 9. first lower material-blocking groove; 10. second lower material-blocking groove; 11. first lower positioning groove; 12. upper final forging cavity; 13. stepped hole; 14. lower final forging cavity; 15. fillet; 16. flat surface; 17. lower spring; 18. lower inner ejector plate; 19. lower ejector pin; 20. lower outer ejector plate; 21. lower ejector pad; 22. upper spring; 23. upper inner ejector plate; 24. upper ejector pin; 25. upper outer ejector plate; 26. upper ejector pad; 27. press block; 28. date stamp; 29. first screw set; 30. second screw set; 31. third screw set; 32. lower circular pressure plate; 33. large flat surface; 34. small flat surface; 35. second lower positioning groove; 36. long-side portion; 37. short-side portion.

### DETAILED DESCRIPTION OF THE EMBODIMENTS

It should be noted that the following detailed descriptions are exemplary and are intended to provide further descriptions of the present invention. Unless otherwise defined, all technical and scientific terms used herein have the same meaning as commonly understood by one of ordinary skilled in the art to which the present invention pertains.

It should be noted that the terminology used herein is for the purpose of describing particular embodiments only and is not intended to limit exemplary embodiments according to the present invention. As used herein, unless otherwise specified herein, the singular forms are also intended to include the plural forms. In addition, it should also be understood that when the terms "comprise" and/or "include" are used in this specification, they specify the presence of features, steps, operations, devices, components, and/or combinations thereof.

The following clearly and completely describes the technical solutions of the present invention with reference to the embodiments. Apparently, the described embodiments are merely a part rather than all of the embodiments of the present invention. All other embodiments obtained by those skilled in the art based on the embodiments of the present invention without creative efforts shall fall within the protection scope of the present invention.

### Embodiment 1

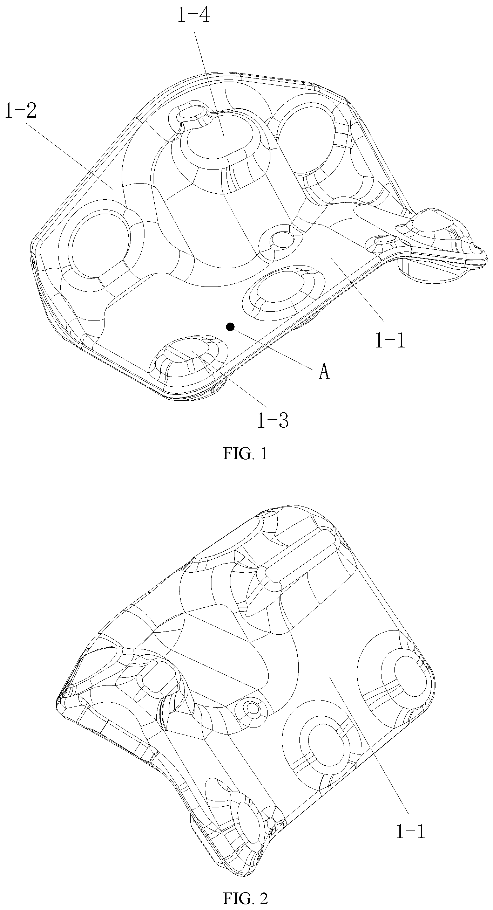

As shown in FIGS. 1 to 3, an aluminum alloy battery pack bracket includes a long-plate portion 1-1 and a short-plate portion 1-2 connected to each other. The long-plate portion 1-1 and the short-plate portion 1-2 are arranged in a V-shaped structure.

An upper surface and a lower surface of the long-plate portion 1-1 are respectively provided with a plurality of small protrusions 1-3. A fillet joint is arranged between the long-plate portion 1-1 and the short-plate portion 1-2, and a large protrusion 1-4 is provided in a middle of the fillet joint.

A thinnest portion A of the aluminum alloy battery pack bracket has a thickness of 5.6 mm.

A manufacturing process of the aluminum alloy battery pack bracket specifically includes the following steps.

Step S1. Blanking: a bar with a diameter of 45 mm is obtained, and the bar is heated to 520°C.

Step S2. Die heating: a forging die is heated to 280°C.

Step S3. Pre-forging: the bar obtained in the step S1 is placed into a heated pre-forging die for pre-forging, and a pre-forged workpiece of the aluminum alloy battery pack bracket is obtained. The bar before pre-forging is at 520°C to 560°C.

Step S4. Final forging: the pre-forged workpiece of the aluminum alloy battery pack bracket obtained in the S3 is placed into a heated final forging die for final forging, and a final forged workpiece of the aluminum alloy battery pack bracket is obtained.

Step S5. Trimming: the final forged workpiece of the aluminum alloy battery pack bracket obtained in the step S4 is placed into a trimming device, flash is removed, and an intermediate product of the aluminum alloy battery pack bracket is obtained.

Step S6. Water cooling: the intermediate product of the aluminum alloy battery pack bracket obtained in the step S5 is cooled in water, where the intermediate product of the aluminum alloy battery pack bracket before the cooling in the water is at 400°C or above.

Step S7. Solution treatment and aging treatment: the intermediate product of the aluminum alloy battery pack bracket obtained from the step S6 is sequentially subjected to solution treatment and aging treatment, and a heat-treated workpiece of the aluminum alloy battery pack bracket is obtained. The solution treatment is performed at 515°C for 80 min, and the aging treatment is performed at 165°C for 6 h.

Step S8. Inspection and packaging.

In the pre-forging of the step S3, a deformation rate from the bar to the pre-forged workpiece of the aluminum alloy battery pack bracket is 86%. In the final forging of the step S4, a deformation rate from the pre-forged workpiece of the aluminum alloy battery pack bracket to the final forged workpiece of the aluminum alloy battery pack bracket is 15%.

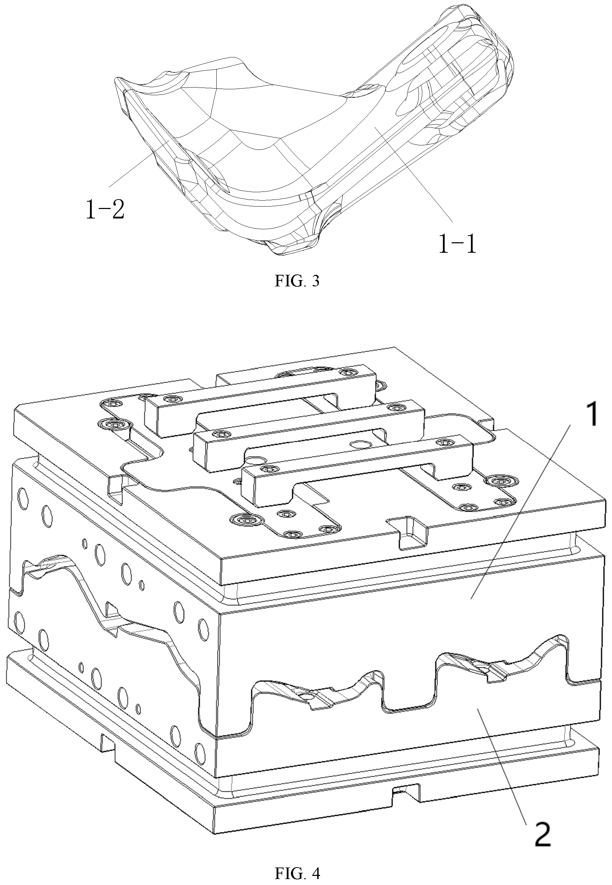

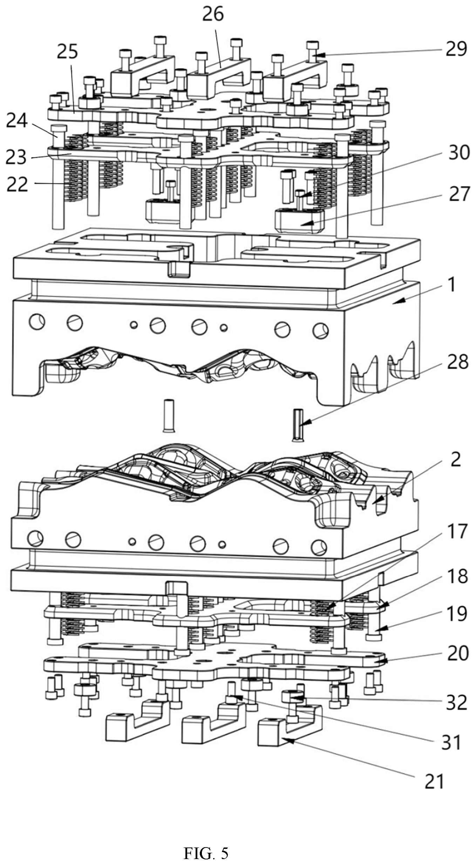

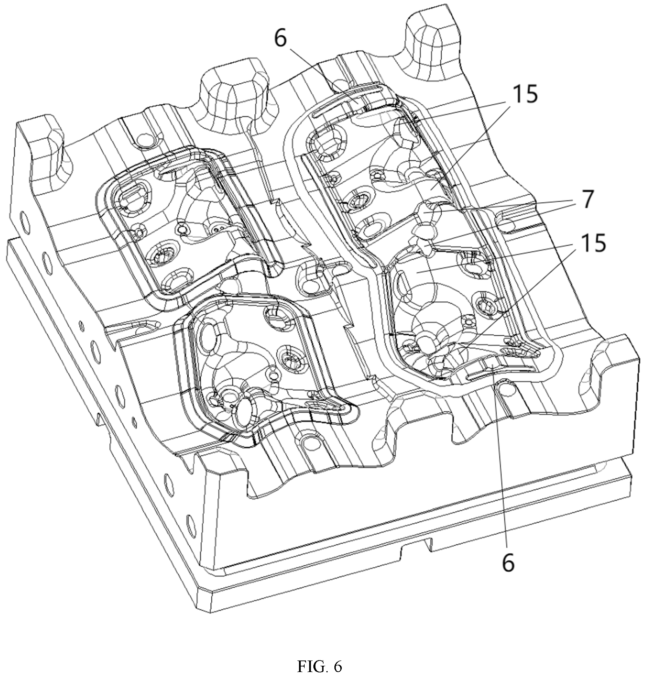

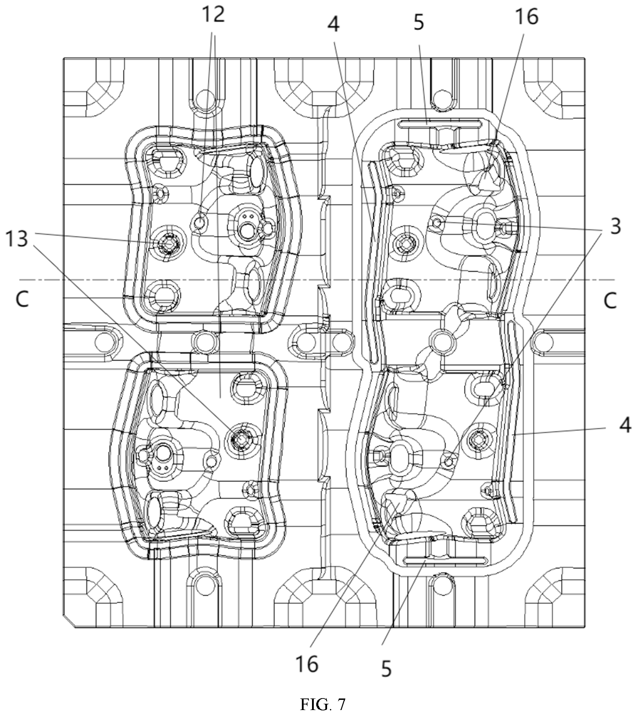

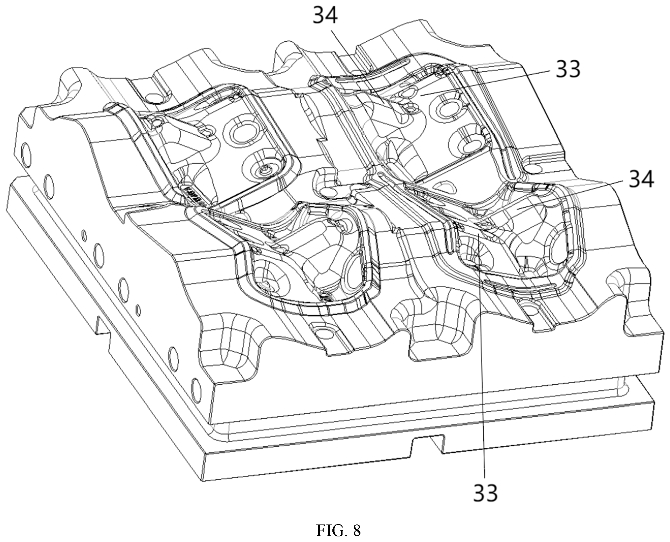

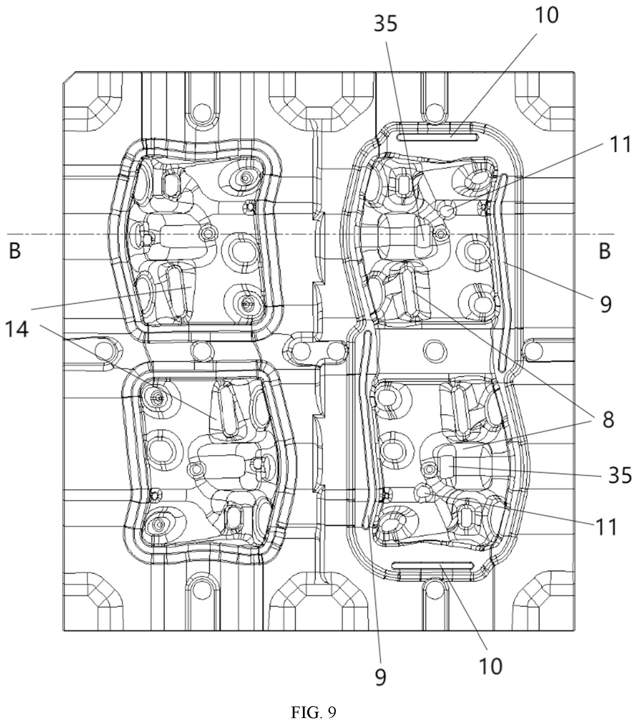

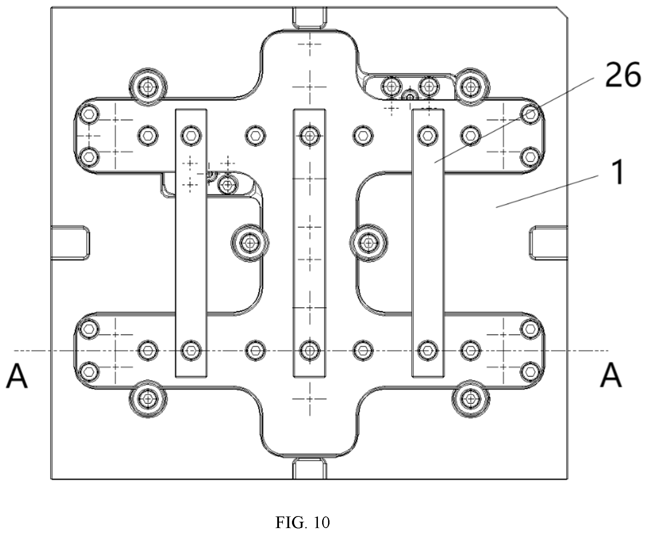

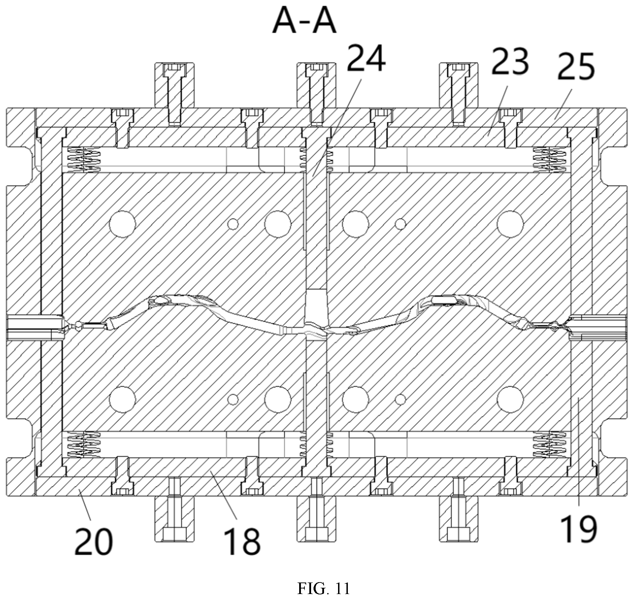

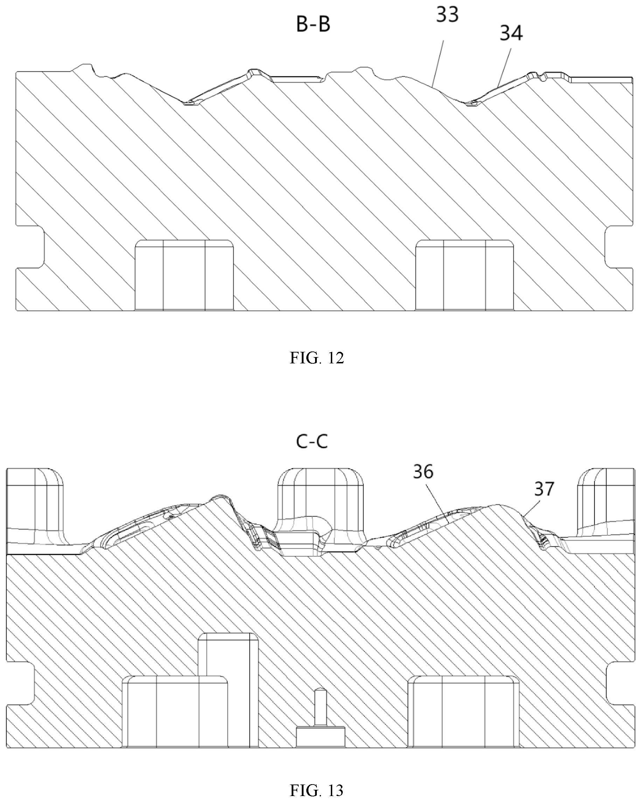

As shown in FIGS. 4 to 13, the forging die includes an upper forging die 1 and a lower forging die 2 disposed directly below the upper forging die 1. The upper forging die 1 and the lower forging die 2 are internally provided with a pre-forging die cavity and a final forging die cavity configured to forge a blank. The pre-forging die cavity includes an upper die pre-forging cavity located in the upper forging die 1 and a lower die pre-forging cavity located in the lower forging die 2.

The upper die pre-forging cavity includes two upper pre-forging cavities 3 identically shaped. The two upper pre-forging cavities 3 are arranged symmetrically about a center of the upper die pre-forging cavity, and centers of the two upper pre-forging cavities 3 are respectively located at two sides of the center of the upper die pre-forging cavity. Each of the upper pre-forging cavities 3 includes a long-side portion 36. An outer side of the long-side portion 36 is provided with a first upper material-blocking groove 4. Second upper material-blocking grooves 5 are respectively disposed at outer sides of ends of the two upper pre-forging cavities 3 far away from each other. First upper positioning grooves 6 are respectively disposed at the ends of the two upper pre-forging cavities 3 far away from each other. Second upper positioning grooves 7 are respectively disposed at ends of the two upper pre-forging cavities 3 adjacent to each other.

The lower die pre-forging cavity includes two lower pre-forging cavities 8 identically shaped. The two lower pre-forging cavities 8 are in one-to-one correspondence with the two upper pre-forging cavities 3. Each of the lower pre-forging cavities 8 includes a large flat surface 33 configured to form the long side of the blank and a small flat surface 34 configured to form the short side of the blank. The large flat surface 33 and the small flat surface 34 are arranged in a V-shaped structure. The large flat surface 33 is provided with a first lower positioning groove 11, and the small flat surface 34 is provided with a second lower positioning groove 35. An outer side of the large flat surface 33 is provided with a first lower material-blocking groove 9 corresponding to the first upper material-blocking groove 4. Second lower material-blocking grooves 10 corresponding to the second upper material-blocking grooves 5 are respectively disposed at outer sides of ends of the two lower pre-forging cavities 8 far away from each other.

The final forging die cavity includes an upper die final forging cavity located in the upper forging die 1 and a lower die final forging cavity located in the lower forging die 2.

The upper die final forging cavity includes two upper final forging cavities 12 identically shaped. The two upper final forging cavities 12 are arranged symmetrically about a center of the upper die final forging cavity. Each of the upper final forging cavities 12 is provided with a stepped hole 13.

The stepped hole 13 is configured to place a clamping post on the blank, and the stepped hole 13 can squeeze the excess material onto the clamping post during the downward pressing of final forging, preventing fold defects caused by excess material from occurring on the working surface of the blank.

The stepped hole 13 includes a first part and a second part that communicate with each other. The first part has a diameter larger than a diameter of the second part, and the first part is closer to the lower forging die 2 than the second part. When the upper forging die 1 is pressed down for forging, the excess material on the clamping post is pressed and accumulated in the first part instead of the working surface, thereby avoiding fold defects on the working surface 16.

The lower die final forging cavity includes two lower final forging cavities 14 identically shaped. The two lower final forging cavities 14 are arranged symmetrically about a center of the lower die final forging cavity and are in one-to-one correspondence with the two upper final forging cavities 12.

Each of the upper pre-forging cavities 3 includes a short-side portion 37. The short-side portion 37 and the long-side portion 36 are arranged in a V-shaped structure, and a fillet 15 is formed at a joint between the short-side portion 37 and the long-side portion 36. A flat surface 16 is further formed at the joint between the short-side portion 37 and the long-side portion 36.

The fillet 15 with a large radius disposed at the joint between the short-side portion 37 and the long-side portion 36 facilitates material flow, thereby avoiding forging defects such as large folds and material shortage at this location during forging.

Considering the special shape of the workpiece blank, the flat surface 16 is added at the joint between the short-side portion 37 and the long-side portion 36. The design facilitates material flow, alleviates the problem of coarse grains on the working surface 16, and avoids sampling of coarse grain layers from the working surface 16 during inspection of the forged workpiece.

The forging die further includes a lower spring 17, a lower inner ejector plate 18, a lower ejector pin 19, a lower outer ejector plate 20, and a lower ejector pad 21. The lower ejector pad 21, the lower outer ejector plate 20, and the lower inner ejector plate 18 are sequentially arranged at a lower end of the lower forging die 2 in a direction adjacent to the upper forging die 1. A first end of the lower spring 17 extends into the lower forging die 2, and a second end of the lower spring 17 passes through the lower inner ejector plate 18 and is connected to the lower outer ejector plate 20. A first end of the lower ejector pin 19 abuts against the lower outer ejector plate 20, and a second end of the lower ejector pin 19 passes through the lower inner ejector plate 18 and extends into the lower forging die 2. The lower spring 17 is a red spring with a diameter of 25 mm and a length of 90 mm.

The lower end of the lower forging die 2 is further provided with a lower circular pressure plate. The lower circular pressure plate includes a lower end passing through the lower outer ejector plate 20 and abutting against a lower end surface of the lower inner ejector plate 18 and an upper end connected to the lower forging die 2 and playing a limiting role on the lower inner ejector plate 18.

The forging die further includes an upper spring 22, an upper inner ejector plate 23, an upper ejector pin 24, an upper outer ejector plate 25, and an upper ejector pad 26. The upper ejector pad 26, the upper outer ejector plate 25, and the upper inner ejector plate 23 are sequentially arranged at an upper end of the upper forging die 1 in a direction adjacent to the lower forging die 2. A first end of the upper spring 22 extends into the upper forging die 1, and a second end of the upper spring 22 passes through the upper inner ejector plate 23 and is connected to the upper outer ejector plate 25. A first end of the upper ejector pin 24 abuts against the upper outer ejector plate 25, and a second end of the upper ejector pin 24 passes through the upper inner ejector plate 23 and extends into the upper forging die 1. The upper ejector pad 26 is disposed on the upper outer ejector plate 25 through a first screw set 29.

The forging die further includes a press block 27 and a date stamp 28. The press block 27 and the date stamp 28 are disposed in the upper forging die 1. The press block 27 abuts against the date stamp 28. A second screw set 30 extends into the press block 27 and abuts against the date stamp 28.

A release agent is required in the pre-forging of the step S3 and the final forging of the step S4, and the release agent is a water-based graphite release agent. This release agent can exert both lubrication and release functions, and its graphite component can reduce the friction between the die and the material, thereby reducing forging stress.

The forging process of the forging die is specifically as follows.

First, the release agent is sprayed on the two lower pre-forging cavities 8. Then a raw material bar is placed on the two lower pre-forging cavities 8. Due to the angle between the large flat surface 33 and the small flat surface 34, the first lower positioning groove 11 and the second lower positioning groove 35 respectively clamp two sides of the raw material bar. Thus, the raw material bar is stably placed between the large flat surface 33 and the small flat surface 34, preventing the raw material bar from rotating.

The upper forging die 1 moves downward. Since the ends of the two upper pre-forging cavities 3 adjacent to each other are higher than the ends of the two upper pre-forging cavities 3 far away from each other, the second upper positioning groove 7 and the second lower positioning groove 35 first contact and clamp the raw material bar. While the second upper positioning groove 7 and the second lower positioning groove 35 clamp the two sides of the raw material bar, the upper forging die 1 continues to move downward. The middle of the raw material bar is pressed, and two ends of the raw material bar are tilted upward. The two ends of the raw material bar are respectively clamped in the first upper positioning grooves 6, playing an auxiliary role in positioning the raw material bar and further preventing the raw material bar from rotating. During the pre-forging process, the raw material bar flows towards the short sides of the lower pre-forging cavity 8 and the upper pre-forging cavity 3 under the combined action of the first upper material-blocking grooves 4, the second upper material-blocking grooves 5, the first lower material-blocking grooves 9, and the second lower material-blocking grooves 10. After pre-forging, the upper ejector pad 26 drives the upper outer ejector plate 25 and the upper inner ejector plate 23 to move downward, thereby driving the upper ejector pin 24 to move downward to eject the pre-forged blank from the upper pre-forging cavities 3. Meanwhile, the lower ejector pad 21 drives the lower outer ejector plate 20 and the lower inner ejector plate 18 to move upward, thereby driving the lower ejector pin 19 to move upward to eject the pre-forged blank from the lower pre-forging cavities 8. The upper forging die 1 moves upward. The upper inner ejector plate 23 drives the upper ejector pad 26, the upper outer ejector plate 25, and the upper ejector pin 24 to reset under the action of the upper spring 22. The lower inner ejector plate 18 drives the lower ejector pad 21, the lower outer ejector plate 20, and the lower ejector pin 19 to reset under the action of the lower spring 17.

Then a robotic arm clamps and places the blank demolded from the pre-forging die cavity on the lower final forging cavity 14. The upper forging die 1 moves downward, and the upper final forging cavity 12 and the lower final forging cavity 14 adjacent to perform final forging pressing on the blank. After final forging, the upper ejector pad 26 drives the upper outer ejector plate 25 and the upper inner ejector plate 23 to move downward, thereby driving the upper ejector pin 24 to move downward to eject the final forged blank from the upper final forging cavities 12. Meanwhile, the lower ejector pad 21 drives the lower outer ejector plate 20 and the lower inner ejector plate 18 to move upward, thereby driving the lower ejector pin 19 to move upward to eject the final forged blank from the lower final forging cavities 14. The upper forging die 1 moves upward. The upper inner ejector plate 23 drives the upper ejector pad 26, the upper outer ejector plate 25, and the upper ejector pin 24 to reset under the action of the upper spring 22. The lower inner ejector plate 18 drives the lower ejector pad 21, the lower outer ejector plate 20, and the lower ejector pin 19 to reset under the action of the lower spring 17. The forging process is completed.

### Embodiments 2 to 9

The solution treatment and aging treatment process parameters of Embodiments 1 to 9 are shown in Table 1. The aluminum alloy battery pack brackets obtained in Embodiments 1 to 9 are tested for tensile strength, yield strength, and elongation, and the test results are shown in Table 2.

**Table 1 Solution treatment and aging treatment process parameters of Embodiments 1 to 9**

| Embodiment | Solution treatment temperature /°C | Solution treatment time /min | Aging treatment temperature /°C | Aging treatment time /h |
|---|---|---|---|---|
| Embodiment 1 | 515 | 80 | 165 | 6 |
| Embodiment 2 | 515 | 100 | 185 | 8 |
| Embodiment 3 | 515 | 120 | 175 | 10 |
| Embodiment 4 | 525 | 80 | 185 | 10 |
| Embodiment 5 | 525 | 100 | 175 | 6 |
| Embodiment 6 | 525 | 120 | 165 | 8 |
| Embodiment 7 | 535 | 80 | 175 | 8 |
| Embodiment 8 | 535 | 100 | 165 | 10 |
| Embodiment 9 | 535 | 120 | 185 | 6 |

**Table 2 Test Results of Embodiments 1 to 9**

| Embodiment | Tensile strength /MPa | Yield strength /MPa | Elongation |
|---|---|---|---|
| Embodiment 1 | 343.8 | 317.8 | 16.6 |
| Embodiment 2 | 329 | 310.4 | 15.2 |
| Embodiment 3 | 344 | 325.8 | 16.4 |
| Embodiment 4 | 332.6 | 315.8 | 13.4 |
| Embodiment 5 | 346.2 | 329.2 | 14.2 |
| Embodiment 6 | 350.8 | 329.0 | 14.4 |
| Embodiment 7 | 342.2 | 324.0 | 15.4 |
| Embodiment 8 | 367.6 | 341.4 | 16.5 |
| Embodiment 9 | 350.8 | 338.2 | 13.0 |

It can be seen from Table 2 that the test results of the tensile strength, yield strength, and elongation of the aluminum alloy battery pack brackets obtained in Embodiments 1 to 9 all meet the production requirements.

In summary, the manufacturing process of the aluminum alloy battery pack bracket is reasonably designed and has the following advantages:
(1) The present invention optimizes the solution treatment and aging treatment processes to reduce forming stress, thereby minimizing the extent of internal stress damage and residual stress within the workpiece and further suppressing the growth of coarse grains in the stress-affected area. Therefore, the present invention is suitable for reducing coarse grains in thin-walled parts.
**(2)** The first upper material-blocking groove 4 and the first lower material-blocking groove 9 change the direction of metal flow, facilitating the material flow from the long sides to the short sides. The second upper material-blocking groove 5 and the second lower material-blocking groove 10 achieve an auxiliary effect of changing the metal flow direction, preventing the material from flowing towards two ends instead of the short sides during pre-forging and further improving material utilization.
(3) The centers of the two upper pre-forging cavities 3 each have an offset in the left-right direction relative to the center of the upper die pre-forging cavity, preventing the raw material bar from deflecting during pre-forging and eliminating the need to chamfer the raw material bar. The second upper positioning groove 7, the first lower positioning groove 11, and the second lower positioning groove 35 ensure accurate placement and positioning of the raw material bar. The first upper positioning grooves 6 arranged at two ends play an auxiliary role in positioning the raw material bar. Thus, during the downward pressing of the upper forging die 1, the two ends of the raw material bar are pressed and can still be clamped in the first upper positioning grooves 6 even if they are tilted up.

Finally, it should be noted that the above embodiments are merely intended to describe the technical solutions of the present invention, rather than to limit the present invention. Although the present invention is described in detail with reference to the above embodiments, those of ordinary skill in the art should understand that they may still make modifications to the technical solutions described in the above embodiments or make equivalent replacements to some or all technical features thereof, without departing from the essence of the technical solutions in the embodiments of the present invention.

## Claims

1. An aluminum alloy battery pack bracket, **characterized by** comprising: a long-plate portion (1-1) and a short-plate portion (1-2) connected to each other, wherein the long-plate portion (1-1) and the short-plate portion (1-2) are arranged in a V-shaped structure; and
an upper surface and a lower surface of the long-plate portion (1-1) are respectively provided with a plurality of small protrusions (1-3); a fillet joint is arranged between the long-plate portion (1-1) and the short-plate portion (1-2); and a middle of the fillet joint is provided with a large protrusion (1-4).

2. The aluminum alloy battery pack bracket according to claim 1, **characterized in that** a thinnest portion A of the aluminum alloy battery pack bracket has a thickness of 5 millimeters to 7 millimeters.

3. A manufacturing process of the aluminum alloy battery pack bracket according to any one of claims 1 to 2, **characterized by** comprising following steps:
step S1: blanking: obtaining a bar;
step S2: die heating: heating a forging die;
step S3: pre-forging: placing the bar obtained in the step S1 into a heated pre-forging die for the pre-forging, to obtain a pre-forged workpiece of the aluminum alloy battery pack bracket, wherein the bar before the pre-forging is at 520°C to 560°C;
step S4: final forging: placing the pre-forged workpiece of the aluminum alloy battery pack bracket obtained in the step S3 into a heated final forging die for the final forging, to obtain a final forged workpiece of the aluminum alloy battery pack bracket;
step S5: trimming: placing the final forged workpiece of the aluminum alloy battery pack bracket obtained in the step S4 into a trimming device, and removing flash, to obtain an intermediate product of the aluminum alloy battery pack bracket;
step S6: water cooling: cooling the intermediate product of the aluminum alloy battery pack bracket obtained in the step S5 in water, wherein the intermediate product of the aluminum alloy battery pack bracket before the cooling in the water is at 400°C or above;
step S7: solution treatment and aging treatment: sequentially subjecting the intermediate product of the aluminum alloy battery pack bracket from the step S3 to the solution treatment and the aging treatment, to obtain a heat-treated workpiece of the aluminum alloy battery pack bracket, wherein the solution treatment is performed at 515°C to 535°C for 80 minutes to 120 minutes, and the aging treatment is performed at 165°C to 185°C for 6 hours to 10 hours; and
step S8: inspection and packaging,
wherein, in the pre-forging of the step S3, a deformation rate from the bar to the pre-forged workpiece of the aluminum alloy battery pack bracket is 86%; and in the final forging of the step S4, a deformation rate from the pre-forged workpiece of the aluminum alloy battery pack bracket to the final forged workpiece of the aluminum alloy battery pack bracket is 15%.

4. The manufacturing process of the aluminum alloy battery pack bracket according to claim 3, **characterized in that** the pre-forging of the step S3 and the final forging of the step S4 are performed on a same forging die; the forging die comprises an upper forging die (1), and a lower forging die (2) disposed directly below the upper forging die (1); the upper forging die (1) and the lower forging die (2) are internally provided with a pre-forging die cavity and a final forging die cavity configured to forge a blank; the pre-forging die cavity comprises an upper die pre-forging cavity located in the upper forging die (1) and a lower die pre-forging cavity located in the lower forging die (2); the upper die pre-forging cavity comprises two upper pre-forging cavities (3) identically shaped; the two upper pre-forging cavities (3) are arranged symmetrically about a center of the upper die pre-forging cavity; and centers of the two upper pre-forging cavities (3) are respectively located at two sides of the center of the upper die pre-forging cavity; and
the lower die pre-forging cavity comprises two lower pre-forging cavities (8) identically shaped; the two lower pre-forging cavities (8) are in one-to-one correspondence with the two upper pre-forging cavities (3); each of the two lower pre-forging cavities (8) comprises a large flat surface (33) configured to form a long side of the blank and a small flat surface (34) configured to form a short side of the blank; the large flat surface (33) and the small flat surface (34) are arranged in a V-shaped structure; the large flat surface (33) is provided with a first lower positioning groove (11); and the small flat surface (34) is provided with a second lower positioning groove (35).

5. The manufacturing process of the aluminum alloy battery pack bracket according to claim 4, **characterized in that** the final forging die cavity comprises an upper die final forging cavity located in the upper forging die (1) and a lower die final forging cavity located in the lower forging die (2); the upper die final forging cavity comprises two upper final forging cavities (12) identically shaped; the two upper final forging cavities (12) are arranged symmetrically about a center of the upper die final forging cavity; and each of the two upper final forging cavities (12) is provided with a stepped hole (13); and
the lower die final forging cavity comprises two lower final forging cavities (14) identically shaped; and the two lower final forging cavities (14) are arranged symmetrically about a center of the lower die final forging cavity and are in one-to-one correspondence with the two upper final forging cavities (12).

6. The manufacturing process of the aluminum alloy battery pack bracket according to claim 4, **characterized in that** each of the two upper pre-forging cavities (3) comprises a short-side portion (37) and a long-side portion (36); the short-side portion (37) and the long-side portion (36) are arranged in a V-shaped structure; and a joint between the short-side portion (37) and the long-side portion (36) is provided with a fillet (15);
the joint between the short-side portion (37) and the long-side portion (36) is further provided with a flat surface (16); and
an outer side of the long-side portion (36) is provided with a first upper material-blocking groove (4); second upper material-blocking grooves (5) are respectively disposed at outer sides of ends of the two upper pre-forging cavities (3) far away from each other; first upper positioning grooves (6) are respectively disposed at the ends of the two upper pre-forging cavities (3) far away from each other; and second upper positioning grooves (7) are respectively disposed at ends of the two upper pre-forging cavities (3) adjacent to each other.

7. The manufacturing process of the aluminum alloy battery pack bracket according to claim 6, **characterized in that** an outer side of the large flat surface (33) is provided with a first lower material-blocking groove (9) corresponding to the first upper material-blocking groove (4); and outer sides of ends of the two lower pre-forging cavities (8) far away from each other are respectively provided with second lower material-blocking grooves (10) corresponding to the second upper material-blocking grooves (5).

8. The manufacturing process of the aluminum alloy battery pack bracket according to claim 4, **characterized in that** the forging die further comprises a lower spring (17), a lower inner ejector plate (18), a lower ejector pin (19), a lower outer ejector plate (20), and a lower ejector pad (21); the lower ejector pad (21), the lower outer ejector plate (20), and the lower inner ejector plate (18) are sequentially arranged at a lower end of the lower forging die (2) in a direction adjacent to the upper forging die (1); the lower spring (17) comprises a first end extending into the lower forging die (2) and a second end passing through the lower inner ejector plate (18) and connected to the lower outer ejector plate (20); and the lower ejector pin (19) comprises a first end abutting against the lower outer ejector plate (20) and a second end passing through the lower inner ejector plate (18) and extending into the lower forging die (2).

9. The manufacturing process of the aluminum alloy battery pack bracket according to claim 4, **characterized in that** the forging die further comprises an upper spring (22), an upper inner ejector plate (23), an upper ejector pin (24), an upper outer ejector plate (25), and an upper ejector pad (26); the upper ejector pad (26), the upper outer ejector plate (25), and the upper inner ejector plate (23) are sequentially arranged at an upper end of the upper forging die (1) in a direction adjacent to the lower forging die (2); the upper spring (22) comprises a first end extending into the upper forging die (1) and a second end passing through the upper inner ejector plate (23) and connected to the upper outer ejector plate (25); and the upper ejector pin (24) comprises a first end abutting against the upper outer ejector plate (25) and a second end passing through the upper inner ejector plate (23) and extending into the upper forging die (1).

10. The manufacturing process of the aluminum alloy battery pack bracket according to claim 3, **characterized in that** a release agent is required in the pre-forging of the step S3 and the final forging of the step S4; and the release agent is a water-based graphite release agent.
